# EUROPEAN PATENT SPECIFICATION

(11) **EP 2 554 547 B1**
(45) Date of publication and mention of the grant of the patent: **29.04.2015**
(21) Application number: 11176448.6
(22) Date of filing: 03.08.2011
(51) Int. Cl.: C07F 5/02

(54) **Transition-metal catalyzed synthesis of diboranes(4)**
Übergangsmetallkatalysierte Synthese von Diboranen(4)
Synthèse catalysée de métal de transition de diboranes(4)

(43) Date of publication of application: 06.02.2013
(73) Proprietor: Julius-Maximilians-Universität Würzburg, 97070 Würzburg (DE)
(72) Inventor: Braunschweig, Holger, 97078 Würzburg (DE); Güthlein, Frank, 97218 Gerbrunn (DE)
(74) Representative: Vossius & Partner Patentanwälte Rechtsanwälte mbB

(56) References cited:
- SHIMADA ET AL: "Formation of Aryl- and Benzylboronate Esters by Rhodium-Catalyzed C-H Bond Functionalization with Pinacolborane", ANGEW. CHEM. INT. ED., vol. 40, no. 11, 1 January 2001 (2001-01-01), pages 2168-2171, XP55014507,

## Description

The invention relates to a porcess for the preparation of diborane(4) compounds. This class of compounds constitutes an important precursor for organoboronic esters, which are versatile reagents for the formation of carbon-carbon bonds.

The current synthesis of diboranes(4) was established by Brotherton in 1960 (R. J. Brotherton, A. L. McCloskey, L. L. Petterson, H. Steinberg, J. Am. Chem. Soc. 1960, 82, 6242-6245) and has been modified several times during the past decades (C. N. Welch, S. G. Shore, Inorg. Chem. 1968, 7, 225-230; P. Nguyen, G. Lesley, N. J. Taylor, T. B. Marder, N. L. Pickett, W. Clegg, M. R. J. Elsegood, N. C. Norman, Inorg. Chem. 1994, 33, 4623-4624; D. Loderer, H. Nöth, H. Pommerening, W. Rattay, H. Schick, Chem. Ber. 1994, 127, 1605-1611; W. Clegg, M.R. J. Elsegood, F. J. Lawlor, N. C. Norman, N. L. Pickett, E. G. Robins, A. J. Scott, P. Nguyen, N. J. Taylor, T. B. Marder, Inorg. Chem. 1998, 37, 5289-5293; T. Ishiyama, M. Murata, T. A. Ahiko, N. Miyaura, Org. Synth. 2000, 77, 176-185; H. A. Ali, I. Goldberg, M. Srebnik, Eur. J. Inorg. Chem. 2002, 73-78). Starting from borontribromide, bromobis(dimethylamino)borane is synthesized in two steps. Subsequently, the formation of a boron-boron-bond is achieved by reductive coupling with Na/K to yield tetrakis(dimethylamino)diborane (B₂(NMe₂)₄). Bis(catecholato)diborane (B₂Cat₂) and bis(pinacolato)diborane (B₂Pin₂) can be obtained by the reaction of B₂(NMe₂)₄ with the corresponding diols (T. ishiyama, M. Murata, T. A. Ahiko, N. Miyaura, Org. Synth. 2000, 77, 176-185; R. J. Brotherton, A. L. McCloskey, J. L. Boone, H. M. Manasevit, J. Am. Chem. Soc. 1960, 82, 6245-6248; H. Nöth, Z. Naturforsch. B: Chem. Sci. 1984, 39B, 1463-1466).

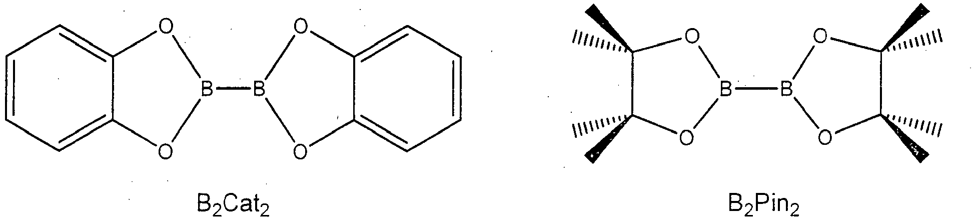

Alternatively, chlorocatecholborane can be used as a starting material for the synthesis of B₂Cat₂. In this case, the boron-boron bond is formed by reductive coupling with sodium amalgam. B₂Pin₂ is not accessible on this reaction pathway (N. R. Anastasi, K. M. Waltz, W. L. Weerakoon, J. F. Hartwig, Organometallics 2003, 22, 365-369).

However, these syntheses imply several disadvantages, especially in regard to the large-scale production of diboranes(4). For example, very reactive or toxic reagents are required for the reductive coupling. Furthermore, as this is a multistep-synthesis, it is quite time consuming and each step produces waste material, which makes the commercially available diboranes(4) rather expensive.

Marder et al. (W. H. Lam, K. C. Lam, Z. Lin, S. Shimada, R. N. Perutz, T. B. Marder, Dalton Trans. 2004, 1556-1562) conducted a theoretical study of reaction pathways for the rhodium phosphine-catalysed borylation of C-H bonds with pinacolborane (HBPin). Therein, they also examined the dehydrodimerisation of HBPin to B₂Pin₂ + H₂ in the presence of a [(PⁱPr₃)₂Rh(Cl)(N₂)] catalyst. According to their theoretical calculations, there is no thermodynamic driving force for this reaction. However, experimental data indicate an equilibrium between HBPin and B₂Pin₂ (S. Shimada, A. S. Batsanov, J. A. K. Howard, T. B. Marder, Angew. Chem. 2001, 113, 2226-2229; Angew. Chem. Int. Ed. Engl. 2001, 40, 2168-2171).

In view of the prior art, it was an object of the present invention to provide a process for the preparation of diboranes(4) which uses less reactive and less toxic reagents, is fast and simple and produces less waste material.

The present inventors have surprisingly found that these objects can be achieved by a process for the preparation of compounds of the general formula (I) (hereinafter also called "diboranes(4)") by coupling of the corresponding boranes of the general formula (II) in the presence of a homogeneous or heterogeneous catalyst as described hereinafter.

Accordingly, the present invention relates to a process for the preparation of diboranes(4), comprising the step of coupling two compounds of the general formula (II), which may be identical or different, 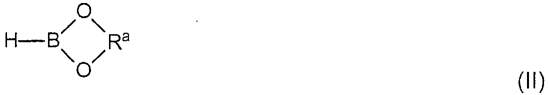 wherein R^{a} is a group independently selected from divalent alkyl, divalent cycloalkyl or divalent aryl. via homogeneous or heterogeneous catalysis in the presence of a catalyst comprising a transition metal selected from Ni, Pd and Pt,
to form a diborane(4) of the general formula (I) 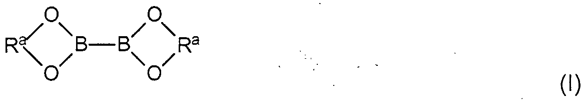 wherein R^{a} is as defined above.

The term "alkyl" as used in the above definition and the following preferred embodiments, encompasses straight and branched alkyl moieties. Unless indicated otherwise, preferred examples of alkyl groups have 1 to 6 carbon atoms (C₁₋₆ alkyl), in particular 1 to 4 carbon atoms (C₁₋₄ alkyl), and include methyl, ethyl, propyl (e.g., n-propyl, or isopropyl) and butyl (e.g., n-butyl, isobutyl, tert-butyl, or sec-butyl). Specifically for the divalent alkyl group R^{a} it is preferred that the divalent alkyl group contains a linear chain with 2 to 6, preferably 2 to 4 carbon atoms extending from one group Z to the other, and the total number of carbon atoms, including branches, is preferably 2 to 10.

The term "cycloalkyl", as used in the above definition and the following preferred embodiments, refers to a cyclic alkyl moiety. Preferred examples of suitable alkyl groups have 4 to 10 carbon atoms, in particular 5 or 6 carbon atoms, and include cyclopentyl and cyclohexyl.

The term "aryl", as used in the above definition and the following preferred embodiments, refers to an aromatic ring system, including single rings and condensed rings, which preferably has 6 to 10 carbon atoms. Particular examples are a phenyl or a naphthyl group.

Preferred boranes of formula (IIa) are 2-methyl-2,4-pentanediolborane, neopentylglycolborane, catecholborane and pinacolborane, of which catecholborane (HBCat) and pinacolborane (HBPin) are particularly preferred.

In the process in accordance with the invention, one type or a mixture of two or more types of compounds of formula (II) may be used as a starting material for the coupling reaction. However, in terms of the control of the obtained structure, it is preferable to use only one type of compound of formula (II). Thus, it is made sure that two identical compounds of formula (II) are coupled in the process in accordance with the invention.

The compounds of formula (II) are conveniently accessible via processes described in the literature, e.g. as discussed above, or in H. C. Newsom, W. G. Woods, Inorg. Chem. 1968, 7, 177-178 and H. Noeth, W. A. Dorochov, P. Fritz, F. Pfab, Z. Anorg. Allg. Chem. 1962, 318, 293-303; R. Köster, H. Bellut, S. Hattori, Justus Liebigs Ann. Chem. 1969, 720, 1-22; H. C. Brown, S. K. Gupta, J. Am. Chem. Soc. 1975, 97, 5249-5255; D. Männig, H. Nöth, J. Chem. Soc. Dalton Trans. 1985, 1689-1692; J. V. B. Kanth, M. Periasamy, H. C. Brown, Org. Process Res. Dev. 2000, 4, 550-553; N. Praveen Ganesh, S. D'Hondt, P. Y. Chavant, J. Org. Chem. 2007, 72, 4510-4514 or B. M. Rosen, C. Huang, V. Percec, Org. Lett. 2008, 10, 2597-2600.

As noted above, the reaction proceeds via heterogeneous or homogeneous catalysis.

As a catalyst for homogeneous catalysis, transition metal compounds containing a metal selected from Pt, Pd and Ni can be used. The transition metal compound can be a salt of the transition metal, such as a halogenide, e.g. a chloride. Preferably, a complex of one of the above transition metals is used as a catalyst for homogeneous catalysis. The transition metal complex preferably contains an optionally substituted cyclopentadienyl ligand, such as cyclopentadienyl (Cp) or pentamethylcyclopentadienyl (Cp*), or a phosphino ligand, especially a chelating ligand combining two phosphino groups, such as bis(diphenylphosphino)methane (dppm) or bis(dicyclohexylphosphino)ethane (dcpe). A chelating phosphino ligand is preferably present in the complexes of Ni, Pd and Pt.

Preferred examples of catalysts for homogeneous catalysis are [(dppm)PtCl₂] (T. G. Appleton, M. A. Bennett, I. B. Tomkins, J. Chem. Soc. , Dalton Trans. 1976, 439-446), [(dcpe)PtCl₂] (M. Hackett, G. M. Whitesides, J. Am. Chem. Soc. 1988, 110, 1449-1462), [(dcpe)PdCl₂] (P. Diversi, G. Ingrosso, A. Lucherini, T. Lumini, F. Marchetti, V. Adovasio, M. Nardelli, J. Chem. Soc., Dalton Trans. 1988, 133-140) and [(dcpe)NiCl₂] (I. M. Angulo, E. Bouwman, R. van Gorkum, S. M. Lok, M. Lutz, A. L. Spek, J. Mol. Catal. A: Chem. 2003, 202, 97-106). [(dppm)PtCl₂] is particularly preferred.

As a catalyst for heterogeneous catalysis, a transition metal selected from Pt, Pd and Ni can be used which is generally in elemental form. Most preferred metals for the heterogeneous catalysis are selected from Pd and Pt. For example, a metal powder may be used. However, it is preferred to use the metal supported on a carrier, such as carbon (e.g. charcoal), a ceramic support (e.g. alumina, silica or combinations thereof), or another inorganic carrier, such as BaSO₄, BaCO₃, CaCO₃, SrSO₄ or SrCO₃. The support is typically a particulate support or a support in the form of pellets. Especially preferred heterogeneous catalysts are Rh/alumina Pt/charcoal, Pt/alumina, Pd/charcoal and Pd/alumina. In case of a supported catalyst, the amount of the transition metal on the support is preferably 0.1 to 20 wt%, more preferably 0.5 to 15 wt% based on the total weight of the catalyst including the support.

The catalyst is generally employed in an amount of 0.001 to 5 mol%, preferably 0.001 to 1 mol%, in terms of the ratio of the moles of metal to the moles of the starting compound (II) used.

It has been found that the turnover-numbers (TON) for the formation of diborane(4) may be improved if the borane is used in large excess. It is therefore preferable to keep the amount of the catalyst relatively low in the reaction mixture. For example, for the heterogeneous catalysis, catalyst loadings in the range of 0.001 to 0.5 mol % , in particular 0.002 to 0.1 mol% and most preferably 0.002 to 0.05 mol% (in terms of the ratio of the moles of metal to the moles of the starting compound (II)) are typically used. For the homogeneous catalysis, a preferred range for the catalyst loading is 0.01 to 0.1 mol%.

The coupling reaction in accordance with the process of the present invention may be carried out in a solvent, but is preferably carried out without a solvent, i.e. by contacting the neat starting compound of formula (II) with the catalyst.

The reaction temperature of the reductive coupling reaction according to the present invention is not particularly limited. Preferably, the reaction temperature is chosen to be in a range of from 50 to 150 °C, more preferably from 80 to 120 °C and most preferably between 100 and 115 °C. However, for compounds of formula (II) which are stable under heat, higher temperatures can be chosen. For example, in case catecholborane or pinacolborane are used, a reaction temperature of from 100 to 120°C is preferred, more preferably 105 to 110 °C.

The reaction time for the coupling reaction according to the present invention is not particularly limited. Preferably, the reaction time is between 0.5 h and 3 days, more preferably between 3 and 30 h, most preferably between 6 and 24 h.

At the end of the reductive coupling reaction, excess starting material may be removed, e.g. via vacuum distillation, and may be collected in a cooling trap to be reused. From the remaining solid, the desired diborane(4) can be recovered, e.g., via sublimation, and can be purified, if needed, via recrystallization or other methods known to the skilled person.

In accordance with a preferred variant of the process in accordance with the invention, formed product is continuously removed, in part or completely, from the reaction mixture. This can be achieved, e.g., by allowing the starting compounds of formula (II) to pass a reaction zone where they are in contact with the catalyst, favorably in a heterogeneously catalyzed reaction such that the catalyst can be conveniently held in place in the reaction zone. After passing the reaction zone, the mixure of starting compounds of formula (II) and diborane(4) of formula (I) can be subjected to a separation process to separate these components from each other. For example, the starting compounds of formula (II) can be distilled from the mixture and can be recycled to the reaction zone.

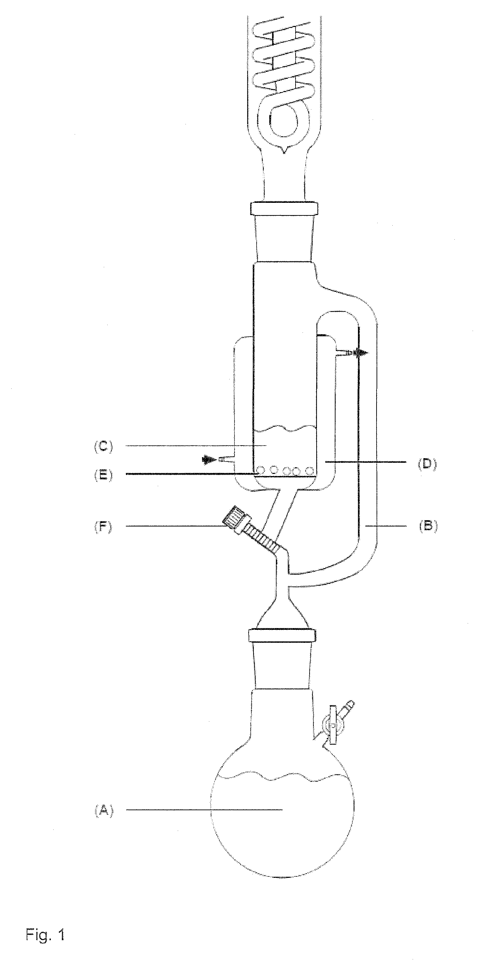

Fig. 1 shows an exemplary schematic reaction setup on a laboratory scale for implementing the process in accordance with the present invention such that the formed product can be continuously removed.

In this exemplary embodiment, the starting borane of formula (II) can be placed in a vessel (e.g. a flask) (A) and be diluted with a high boiling solvent, e.g. mesitylene, in order to minimize its decomposition during heating. The decomposition of the starting borane, such as HBPin (pinacolborane), can be further minimized by adding between 1 and 10 mol% of NEt₃ or other Lewis-bases such as pyridine or alkyl phosphines (preferably PiPr₃ and PtBu₃). The starting borane is then distilled from this mixture (B) and condensed into a reaction chamber (C) which can be heated, e.g. by a glass jacket containing a heating fluid (D). It is preferred that the distilled borane of formula (II) entering into the reaction chamber is neat, as dilution with co-distilled solvent can impair the coupling reaction. Inside the reaction chamber, a stationary catalyst is provided, which can be contacted by the borane of formula (II). For example, the catalyst can be placed on a tray (E) which is permeable for liquids, and forms a reaction mixture with the borane of formula (I). Under these conditions, heterogeneous catalysts e.g. in the form of carrier pellets can be favourably used. Via a flow regulator (F), such as a Teflon stop cock, a continuous flow of the reaction mixture containing the diborane(4) of formula (I) resulting from the coupling reaction back into the flask (A) is maintained. Via this equipment, the diboranes(4) can be removed from the actual reaction mixture and TONs of more than 1000 are achieved. After removing excess borane and the solvent in vacuo, the diboranes(4) can be isolated as described above.

By adding a further catalyst to the reaction mixture containing the resulting diborane(4) of formula (I), the diborane can be reacted in situ with unsaturated compounds, such as compounds containing multiple carbon-carbon, carbon-nitrogen or nitrogen-nitrogen bonds.

The catalysts should be added at the beginning of the reaction in order to remove the diborane(4) from the reaction mixture continuously. Possible catalysts useful for this purpose are complexes of Pt(0), Rh(0), and Ir(0), which can transfer the diborane(4) to unsaturated compounds that do not react with HBPin or HBCat.

A number of advantages are associated with the process for the preparation of diborane(4) according to the present invention. In contrast to the conventional method, only one step is needed, with a rather easily accessible borane as a starting material. Furthermore, solvents are needed only for the isolation of the product, whereas the reaction itself may be conducted in neat borane. Another important advantage is that the catalysts used for the dehydrocoupling are much easier to handle than the alkali metals needed for the reductive coupling employed in the prior art. Finally, only small quantities of byproduct are formed, which reduces the amount of the resulting waste material to a minimum and diminishes the necessity of purification of the resulting product.

### Examples

### Example 1: Synthesis of Bis(catecholato)diborane (B₂Cat₂)

In a typical reaction, neat HBCat (catecholborane, 105 g, 872 mmol) is heated with platinum charcoal (10 wt% platinum, 100 mg, 51.3 µmol, loading: 0.006 mol%) to 105 °C, while a light stream of dry argon is passed through the solution. After 20 h, excess HBCat is removed in vacuo and collected in a cooling trap for reuse. The remaining black solid is sublimed at 125°C and 4·10⁻² mbar for 10 h to yield a solid colorless crude product consisting of B₂Cat₂ and several byproducts. Recrystallization from diethyl ether affords B₂Cat₂, which can occasionally contain a smaller amount of the catecholato-bridged byproduct B₂Cat₃. This byproduct can be destroyed by adding some drops of water to the product dissolved in diethyl ether or dichloromethane, which turns the initially clear solution cloudy. After filtration, the solvent is removed, leaving catechol as the only impurity. Further purification is achieved by sublimation at 120 °C and 4·10⁻² mbar within 60 minutes. During this sublimation, pure B₂Cat₂ (4.36 g, 18.3 mmol) is collected on a sublimation finger, which is heated to 55 °C, whereas the catechol precipitates at the cooler wall of the flask. Alternatively, catechol can be removed by further recrystallization from diethyl ether and crystallizing at -30 °C.

### Examples 2 to 10

In the same way as in Example 1, B₂Cat₂ has been prepared using other heterogeneous catalysts, as shown in table 1.

**Table 1 (Examples marked with * are reference examples)**

| **Example** | **Catalyst (loading [mol%])** | **Turnover-Number** |
|---|---|---|
| 1 | Platinum charcoal (0.006%) | 350 |
| 2* | Titanium powder (0.4%) | 13 |
| 3* | Zirconium powder (0.4%) | 3 |
| 4* | Hafnium powder (0.4%) | 13 |
| 5 | Palladium charcoal (0.05%) | 35 |
| 6 | Platinum charcoal (0.05%) | 105 |
| 7 | Platinum on alumina (0.05%) | 95 |
| 8 | Palladium charcoal (0.025%) | 75 |
| 9 | Platinum charcoal (0.025%) | 190 |
| 10 | Platinum on alumina (0.025%) | 220 |

Under heterogeneous conditions, a maximum turnover-number of 350 is obtained by the reaction of 0.006 mol% platinum charcoal (10wt% platinum) with neat HBCat. Platinum on alumina and palladium charcoal can also be used as heterogeneous catalysts, affording different TONs depending on the catalyst loading. Group-4-metal powders also catalyze the formation of B₂Cat₂, but the efficiency of the process is not as high.

### Examples 11 to 24

In a similar reaction as in Example 1, except for adding a transition metal compound as indicated in table 2 to the neat HBCat instead of an elemental metal to perform homogeneous catalysis, B₂Cat₂ was prepared using the catalysts shown in table 2.

**Table 2 (Examples marked with * are reference examples)**

| **Example** | **Catalyst (loading [mol%])** | **Turnover-Number** |
|---|---|---|
| 11* | [Cp₂TiCl₂] (0.05%) | 130 |
| 12* | [Cp₂ZrCl₂] (0.05%) | 200 |
| 13* | [Cp*₂HfCl₂] (0.05%) | 164 |
| 14* | [CpTiCl₃] (0.05%) | 106 |
| 15* | HfCl₄ (0.05%) | 48 |
| 16* | Hfl₄ (0.05%) | 59 |
| 17 | [(dppm)PtCl₂] (0.05%) | 90 |
| 18 | [(dcpe)PtCl₂] (0.05%) | 65 |
| 19 | [(dcpe)PdCl₂] (0.05%) | 75 |
| 20 | [(dcpe)NiCl₂] (0.05%) | 35 |
| 21 | [(dppm)PtCl₂] (0.025%) | 160 |
| 22 | [(dcpe)PtCl₂] (0.025%) | 90 |
| 23 | [(dcpe)PdCl₂] (0.025%) | 90 |
| 24 | [(dcpe)NiCl₂] (0.025%) | 50 |

Under these conditions, group-4-compounds are the best catalysts, with a maximum TON of 200. Among the late transition metal compounds, [(dppm)PtCl₂] turned out to be the most effective catalyst, with a maximum TON of 160 (see table 2; Cp = cyclopentadienyl, Cp* = pentamethylcyclopentadienyl, dppm = bis(diphenylphosphino)methane), dcpe = bis(dicyclohexylphosphino)ethane).

### Example 25: Synthesis of Bis(pinacolato)diborane (B₂Pin₂)

In a typical reaction, neat HBPin (pinacolborane, 85.0 g, 513 mmol) is heated with platinum on alumina (100 mg, 25.6 µmol) to 105 °C for several hours and monitored by GC. Excess HBPin is removed in vacuo and collected in a cooling trap for reuse. Subsequent sublimation affords a white crude product consisting of B₂Pin₂ and (PinB)₂O. Isolation of B₂Pin₂ is achieved by dissolving the crude product in pentane and extracting with dilute hydrochloric acid. After removing the solvent, pure B₂Pin₂ is obtained. In case further purification is necessary, this can be achieved by sublimation at 65 °C and 4·10⁻² mbar within 60 minutes.

### Examples 26 and 27

In the same way as in Example 25, B₂Pin₂ has been prepared using other heterogeneous catalysts as shown in table 3.

**Table 3**

| **Example** | **Catalyst (loading [mol%])** | **Turnover-Number** |
|---|---|---|
| 25 | Platinum on alumina (0.005%) | 90 |
| 26 | Palladium charcoal (0.025%) | 60 |
| 27 | Platinum charcoal (0.025%) | 60 |

A TON (turnover number) of 90 can be achieved with platinum on alumina, whereas platinum and palladium charcoal afford TONs of 60 each.

### Example 28

Using the reaction setup illustrated in Fig. 1, a mixture of HBPin (17.6 g, 20 mL, 138 mmol), NEt₃ (7.23 mmol) and 100 mL mesitylene was heated to ca. 160 °C. The neat borane was thus distilled into the reaction chamber equipped with platinum on alumina (0.5 wt%, 200 mg, 5.13 µmol). A constant reaction temperature of 120 °C was maintained by a glass jacket heated with polyethylene glycol 400. Via a Teflon stop cock, the flow of borane back into the flask was regulated, so that a constant volume of ca. 3-5 mL HBPin is in contact with the catalyst (effective catalyst loading in the reaction chamber 0.015-0.025 mol%). In general, the reaction time can be extended to more than one week, since no significant loss in catalyst activity is observed. However, in order to avoid an excessive decomposition of HBPin, reaction times of 20-50 hours are most favorable. Excess HBPin and mesitylene were removed in vacuo and the resulting crude product was purified as described above, yielding 1.36 g (6.06 mmol, TON 1050) B₂Pin₂.

### Examples 29 to 30

In the same way as in Example 28, B₂Pin₂ has been prepared using other heterogeneous catalysts, as shown in table 4.

**Table 4 (Examples marked with * are reference examples)**

| **Example** | **Catalyst (loading [mol%])** | **Turnover-Number** |
|---|---|---|
| 28 | Platinum on alumina | 1050 |
| 29* | Rhodium on alumina | 284 |
| 30 | Palladium on alumina | 513 |

### Examples 31 and 32

In the same way as in Example 28, B₂Cat₂ has been prepared using heterogeneous catalysts, whereas TONs of up to 9200 were achieved, as shown in table 5.

**Table 5 (Examples marked with * are reference examples)**

| **Example** | **Catalyst (loading [mol%])** | **Turnover-Number** |
|---|---|---|
| 31 | Platinum on alumina | 9200 |
| 32* | Rhodium on alumina | 6500 |

## Claims

1. A process for the preparation of a diborane(4), comprising the step of coupling two compounds of the general formula (II), which may be identical or different, 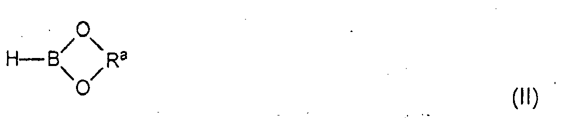 wherein R^{a} is a group independently selected from divalent alkyl, divalent cycloalkyl or divalent aryl,
via homogeneous or heterogeneous catalysis in the presence of a catalyst comprising a transition metal selected from Ni, Pd and Pt,
to form a diborane(4) of the general formula (I) 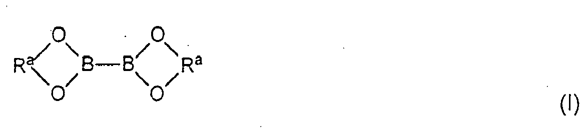 wherein R^{a} is as defined above.

2. The process of claim 1 wherein the compounds of formula (II) are coupled via heterogeneous catalysis in the presence of an elemental transition metal as a catalyst.

3. The process of claim 2 wherein the transition metal is supported on a carrier.

4. The process of claim 3 wherein the amount of the transition metal is 0.1 to 20 wt% based on the total weight of the supported catalyst.

5. The process of claim 1 wherein the compounds of formula (II) are coupled via homogeneous catalysis in the presence of a transition metal compound as a catalyst.

6. The process of claim 5 wherein the transition metal compound is a transition metal complex.

7. The process of claim 6, wherein the complex comprises a ligand selected from cyclopentadienyl, pentamethylcyclopentadienyl, bis((diphenylphosphino)methane), and bis(dicyclohexylphosphino)ethane.

8. The process of claim 5 wherein the transition metal compound is a transition metal salt.

9. The process of any of claims 5 to 8, wherein the transition metal compound comprises a metal selected from Group 4 of the periodic table.

10. The process of any of claims 1 to 9 wherein the catalyst is employed in an amount of 0.001 to 5 mol%, based on the total amount of the compound formula (II) used in the coupling reaction.

11. The process of any of claims 1 to 10 wherein the catalyst is contacted with the neat compound of formula (II).

12. The process of any of claims 1 to 11, wherein the diborane(4) of formula (I) is removed from the reaction mixture while the reaction proceeds.

13. The process of any of claims 1 to 12, wherein only one type of compound of formula (II) is used in the coupling reaction.

## Patentansprüche

1. Ein Verfahren zur Herstellung eines Diborans(4), umfassend den Schritt des Kuppelns von zwei Verbindungen der allgemeinen Formel (II), welche identisch oder verschieden sein können, 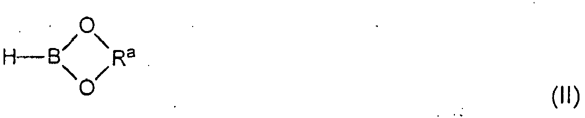 wobei R^{a} ein Rest ist, unabhängig ausgewählt aus zweiwertigem Alkyl, zweiwertigem Cycloalkyl oder zweiwertigem Aryl
mittels homogener oder heterogener Katalyse in Gegenwart eines Katalysators, der ein Übergangsmetall, ausgewählt aus Ni, Pd und Pt, umfasst,
um ein Diboran(4) der allgemeinen Formel (I) 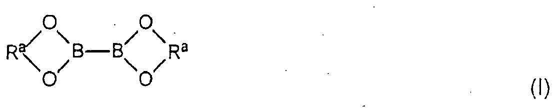 zu bilden, wobei R^{a} wie vorstehend definiert ist.

2. Das Verfahren nach Anspruch 1, wobei die Verbindungen der Formel (II) mittels heterogener Katalyse in Gegenwart eines elementaren Übergangsmetalls als ein Katalysator gekuppelt werden.

3. Das Verfahren nach Anspruch 2, wobei das Übergangsmetall auf einem Träger gehalten wird.

4. Das Verfahren nach Anspruch 3, wobei die Menge des Übergangsmetalls 0,1 bis 20 Gew.-%, bezogen auf das Gesamtgewicht des geträgerten Katalysators, beträgt.

5. Das Verfahren nach Anspruch 1, wobei die Verbindungen der Formel (II) mittels homogener Katalyse in Gegenwart einer Übergangsmetallverbindung als ein Katalysator gekuppelt werden.

6. Das Verfahren nach Anspruch 5, wobei die Übergangsmetallverbindung ein Übergangsmetallkomplex ist.

7. Das Verfahren nach Anspruch 6, wobei der Komplex einen Liganden, ausgewählt aus Cyclopentadienyl, Pentamethylcyclopentadienyl, Bis((diphenylphosphino)methan) und Bis(dicyclohexylphosphino)ethan, umfasst.

8. Das Verfahren nach Anspruch 5, wobei die Übergangsmetallverbindung ein Übergangsmetallsalz ist.

9. Das Verfahren nach einem der Ansprüche 5 bis 8, wobei die Übergangsmetallverbindung ein Metall, ausgewählt aus Gruppe 4 des Periodensystems, umfasst.

10. Das Verfahren nach einem der Ansprüche 1 bis 9, wobei der Katalysator in einer Menge von 0,001 bis 5 Mol%, bezogen auf die in der Kupplungsreaktion verwendete Gesamtmenge der Verbindung der Formel (II), verwendet wird.

11. Das Verfahren nach einem der Ansprüche 1 bis 10, wobei der Katalysator mit der reinen Verbindung der Formel (II) in Kontakt gebracht wird.

12. Das Verfahren nach einem der Ansprüche 1 bis 11, wobei das Diboran(4) der Formel (I) aus dem Reaktionsgemisch entfernt wird während die Reaktion fortschreitet.

13. Das Verfahren nach einem der Ansprüche 1 bis 12, wobei nur eine Art der Verbindung der Formel (II) bei der Kupplungsreaktion verwendet wird.

## Revendications

1. Procédé de préparation d'un diborane (4), comprenant l'étape de couplage de deux composés de formule générale (II), qui peuvent être identiques ou différents, 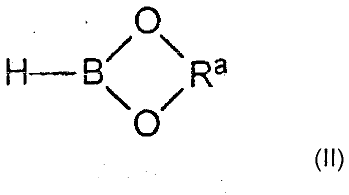 dans laquelle R^{a} représente un groupe indépendamment choisi parmi les groupes alkyle divalent, cycloalkyle divalent ou aryle divalent
via catalyse homogène ou hétérogène en présence d'un catalyseur comprenant un métal de transition choisi parmi Ni, Pd et Pt,
pour former un diborane (4) de formule générale (I) 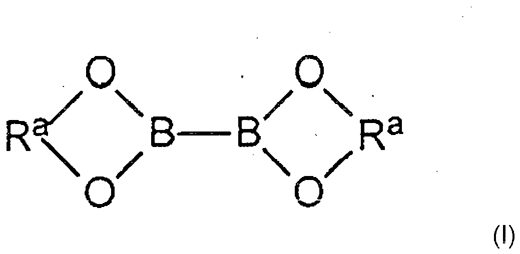 dans laquelle R^{a} est tel que défini ci-dessus.

2. Procédé selon la revendication 1 dans lequel les composés de formule (II) sont couplés via catalyse hétérogène en présence d'un métal de transition élémentaire en tant que catalyseur.

3. Procédé selon la revendication 2 dans lequel le métal de transition est supporté sur un support.

4. Procédé selon la revendication 3 dans lequel la quantité de métal de transition est de 0,1 à 20 % en poids par rapport au poids total du catalyseur supporté.

5. Procédé selon la revendication 1 dans lequel les composés de formule (II) sont couplés via catalyse homogène en présence d'un composé à base de métal de transition en tant que catalyseur.

6. Procédé selon la revendication 5 dans lequel le composé à base de métal de transition est un complexe à base de métal de transition.

7. Procédé selon la revendication 6, dans lequel le complexe comprend un ligand choisi parmi le cyclopentadiényle, le pentaméthylcyclopentadiényle, le bis((diphénylphosphino)méthane) et le bis(dicyclohexylphosphino)éthane.

8. Procédé selon la revendication 5 dans lequel le composé à base de métal de transition est un sel de métal de transition.

9. Procédé selon l'une quelconque des revendications 5 à 8, dans lequel le composé à base de métal de transition comprend un métal choisi dans le groupe 4 du tableau périodique des éléments.

10. Procédé selon l'une quelconque des revendications 1 à 9 dans lequel le catalyseur est employé en une quantité de 0,001 à 5 % en mol, par rapport à la quantité totale de composé de formule (II) utilisée dans la réaction de couplage.

11. Procédé selon l'une quelconque des revendications 1 à 10 dans lequel le catalyseur est mis en contact avec le composé de formule (II) pur.

12. Procédé selon l'une quelconque des revendications 1 à 11, dans lequel le diborane (4) de formule (I) est extrait du mélange réactionnel alors que la réaction se déroule.

13. Procédé selon l'une quelconque des revendications 1 à 12, dans lequel seul un type de composé de formule (II) est utilisé dans la réaction de couplage.
